# EUROPEAN PATENT APPLICATION

(11) **EP 1 093 932 A1**
(43) Date of publication of application: **25.04.2001**
(21) Application number: 00119181.6
(22) Date of filing: 05.09.2000
(51) Int. Cl.: B41M 1/24, B41M 3/14

(54) **Security printing method**

(30) Priority: 21.10.1999 GB 9924785; 11.03.2000 GB 0005768; 26.01.2000 GB 0001607
(71) Applicant: Polestar Jowetts Ltd, Leeds, LS24 2HR (GB)
(72) Inventor: Thompson, Alex, c/o Polestar Jowetts Ltd., Leeds, LS24 2HR (GB)
(74) Representative: Denmark, James

(57) **Abstract**

A holographic image printing method is described wherein a substrate material such as conventional board is firstly coated with an ink, varnish, lacquer or other opaque, or translucent coating. The coated board is subsequently pressuredly contacted with a holographic impression plate on which is provided a shim or the like having a holographic relief pattern etched thereon. During the impression of the substrate, the board and/or shim are heated to between 80 and 180°C, the particular temperature being determined by the particular coating provided on the substrate. While impression is taking place, the pressure is both sufficient to cause the coating to flow plastically into the microscopic recesses in the holographic image plate and also to cause the overall relief profile of the substrate to be altered in the region surrounding or adjacent the holographic image so delivered to the coating of said substrate. The effect is the provision of a relief feature on the substrate within which is provided an aesthetic holographic image.

## Description

This invention relates to a security printing method, and more specifically to a method for providing holographic-type security features on cardboard, carton board, paper board, paper, and other like opaque compressible substrates which are require to be printed before formation into cartons, boxes, receptacles and the like.

Holograms are well known in the art as being capable of providing security features on valuable documents and products, either by providing the hologram on an integral portion or component of the document or product, or by applying thereto a usually metallic foil with a holographic image thereon and securely adhering same thereto.

Holograms are essentially light wave interference patterns recorded on photographic film (or other suitable surface) that can produce a 3-dimensional image when illuminated properly. The making of holographic film plates is beyond the scope of this application, but briefly a laser beam is split into two beams, namely a reference beam which is spread by a lens or curved mirror and aimed directly at the film plate, and an object beam which is spread and aimed at the object. The object reflects some of the light on the holographic image plate. The two beams interact forming an interference pattern on the plate, which is subsequently etched according to the image definition, and this etched plate is used to form the holographic metallic shim plate master from which other hologram images can be produced.

It should be mentioned that in the creation of the master holographic image from which holograms can be mass-produced, a microscopic relief pattern is provided in the surface of the master by virtue of the process described above, or by other known processes by which holograms are made.

There are a number of different types of holograms, including Transmission Holograms which are viewable with laser light, Reflection (White Light) Holograms which are viewable with white light from a suitable source such as spotlight, flashlight, the sun, etc., Multiple Channel Holograms in which two or more images are visible from different angles, Rainbow holograms in which the same image appears in a different colour when viewed from different angles, and Real Image Holograms (H-2s) wherein the image dramatically projects in front of the plate toward the viewer.

The vast majority of mass produced holograms are embossed. In general, a metallic plate formed as described above and provided with the said microscopic relief pattern is provided and either wrapped around a rotating impression cylinder which acts on a reaction cylinder and defines a nip therewith, or applied in planar form to a stamping tool or platen. The holograms are then produced by either passing a continuous web of a foil backed mylar film through the nip defined by the cylinders or feeding in step-wise manner a sheet of the film underneath the stamping platen. In either circumstance the compression force generated on the film causes the film material to microscopically and plastically deform as the holographic image is embossed therein so that a reverse copy of the holographic image is provided in the film. The foil or other mirror-like surface behind the film allows light to be reflected back through the film, at least in the region of the hologram which thus readily appears to the human eye when viewed under normal light.

This identical principle is used in the production of polyester film wrapping materials having holograms embossed therein, such as those which may be applied around products of value or products which are required to be easily authenticated as to their origin, for example Compact Discs wrappings or Cigarette and Cigar box wrappings.

In this particular use of holographic technology, a web of polyester material film is passed through a heated nip in a pair of proximally disposed cylinders, one of which bears a holographic master plate. Heat is required to allow the polyester material to flow more easily during the embossing of the master image in the film, but in any event the rate of travel of the web through the nip is very slow, typically a few metres of film per minute. This is most probably because of the quantity of material which is required to flow and be plastically deformed within the nip before any holographic image appears to the naked eye in the film. Additionally, not only are any coatings which are applied to the material film embossed, but the core polyester material film layer itself is substantially deformed during the embossing process.

In circumstances where it is desired to produce a carton board having a holographic feature thereon, the hologram-embossed film from the process described above is generally laminated to such a board, commonly by a piece of apparatus known as a foil blocking machine. It is to be mentioned at this stage the regardless of whether the film is provided with holographic images, the production method using foil blocking machines is identical.

In the process, printed carton board blanks having regions on which it is desired to provide a holographic or plain metallised foil feature are fed consecutively at a rate of one every 4-5 seconds into the foil blocking machine and correctly aligned above a first optionally heated platen. One or more sheets or strips of metallised film in web form optionally having holographic images already impressed therein are simultaneously fed into the machine above the surface of the carton on which the holographic features are to be provided. The film generally consists of a base polyester layer, a release layer, a vacuum metallised foil layer and a hot melt adhesive layer. As an upper platen within the foil blocking machine having dies suitably arranged thereon and in register with the portions of the surface of the printed carton board which are to receive the foil portions is pressingly lowered onto the lower platen, the heat from the lower platen melts the adhesive layer of the foil in the desired areas and activates the release layer so that the vacuum metallised foil layer is transferred from the film to the carton board in the region of the die and the remainder of the film merely passes through the machine to be discharged as waste.

This process is commonly used to provide carton board having metallic foil regions for packaging items of actual, reputedly or perceived high value. Examples include after-shaves, lotions, cosmetics, perfumes, cigarettes, cigars and the like, and indeed most modern cigarette boxes are provided with some foil thereon to increase their aesthetic appeal. When it is considered that often only relatively small areas of a printed carton are to be provided with metallised foil regions, it can be immediately understood that the process is highly wasteful.

A yet further disadvantage of this production method is the length of time taken to set up the platens within the machine to ensure a correct pressure distribution over the entire area of said platens, which may be over 1m square. Any imperfections in the pressure distribution results in the incomplete transfer of the vacuum metallised foil layer of the film which renders that particular carton board wasted. It may take an operate a substantial portion of a whole day to prepare a foil blocking machine satisfactorily.

It is an object of this invention to provide a method for inexpensively and efficiently creating a holographic image on a printed carton, paper or like board substrate without need for lamination of film having holographic images previously impressed therein.

According to the invention there is provided a method for providing a printed, varnished, lacquered or otherwise coated carton-type board substrate with a holographic image, comprising the steps of passing said substrate through an impression station whereat said substrate is subjected to heat while being pressuredly contacted with a holographic image plate characterised in that the holographic image plate impresses a relief holographic pattern into the coating of said substrate and that said impression alters the relief profile of the substrate in the region of said impressed holographic image.

Preferably the substrate has a metallised coating, a substantial portion of which is obscured by printed material to leave only discrete portions in which a holographic image can be impressed.

The invention arises in the realisation by the inventor that both the coatings typically applied to substrates are only a few microns thick, and therefore the formation of the holographic relief pattern therein can be effected by heating these coatings and causing them to flow while simultaneously pressuredly contacting them with a holographic image master. Accordingly, the particular nature of the substrate is irrelevant to the invention, except in that it must be capable of being passed swiftly through the impression station mentioned above.

Secondly, the application of at least one ink, varnish, lacquer or other coating over the underlying substrate is crucial. Experimentation has shown that passing plain board through the impression station results in the destruction of the heated holographic image plate, as the clay constituents of the board are leached therefrom and are retained on the holographic image plate in the region of the relief pattern. Briefly, the board breaks, tears and sticks to the holographic image plate.

Preferably, the holographic image plate is maintained at a temperature of between 80° and 180°C.

The invention also results from the realisation that inks, lacquers or varnishes have a transparent characteristic and can therefore give rise to enhanced holographic effects which are accentuated or highlighted by the alteration of the relief profile of the substrate in the region of the said holographic image.

Preferably, the alteration of the relief profile of the board is manifested in an embossing or de-bossing of the particular portion of the substrate immediately below the coating on which the hologhraphic image is impressed.

It is preferable that the process is sheet fed as the depth of impression of the plate on which the holographic image is provided can be extremely accurately set, and the dwell time (the length of time during which the plate compressively acts on the substrate) can be easily altered. This allows an operator to adjust the parameters of the embossing process easily to ensure that the embossed holographic image is made permanent in the coating.

Preferably the coating is an ink layer, optionally further covered by a lacquer or varnish layer to prevent the ink from running or being abradably impaired after printing.

Preferably, said ink and lacquer or varnish layers are allowed to dry before being impressed in accordance with the invention.

Preferably the substrate is a conventional carton board which is coated on at least one side with a metallised polymer film to provide at least one surface of the board with a high degree of reflectivity. Thereafter the coated board is prefereably printed on the coated surface to substantially obscure the reflective layer except in regions where it is desired to provide a holographic impression.

It is to be mentioned that the metallised polymer film is not the same as the metallised film discussed above and used in connection with the foil blocking machine as the metallised polymer film consists only of a polymer layer, a metallised layer and optionally an adhesive layer by which the film is adhered to the substrate. This can be easily achieved across the width of the substrate so that the polymer layer provides the uppermost surface of the substrate/film sandwich. It is this polymer layer which flows and in which the holographic image is impressed in accordance with the invention.

It is believed that the lacquer layer provides the variation in optical density necessary to produce the refraction and reflection of incident light which gives rise to the holographic effect.

In a modified aspect of the invention, the substrate is provided in web form and passed continuously through a lithographic or flexographic printing press whereafter a lacquer is applied thereto and subsequently the printed, lacquered board substrate is fed between a pair of proximally disposed cylinders defining a nip, one of said cylinders being provided with a plate thereon having at least one relief pattern on its external surface.

It will immediately be appreciated by those skilled in the art that the method of providing a holographic security feature on a board substrate according to the invention represents a significant advance because either there is no requirement for lamination of small areas of metallised film to the substrate after printing thereof to provide the holographic effect, or alternatively the entire of one side of the substrate can be coated with the metallised polymer film which can be accomplished with greater ease and effectiveness than by using a foil blocking machine. Furthermore, the holographic image can be created very quickly in the ink, or lacquer/varnish layers because such are prone to flow much more readily than conventional polyester film.

Accordingly, in further aspects of the invention there is provided a conventional board substrate material having a thermo-plastic coating layer of an ink, varnish, lacquer or metallised polymer film applied thereto which is capable of flowing when heated, said film or board material having impressed therein a holographic image according to the invention.

The rate of travel of sheets or a web through the impression station can therefore be substantially the same as that through conventional printing presses, and there is no need to reduce the rate of web transfer therethrough simply on account of the requirements of the impression station.

A specific embodiment of the invention will now be described by way of example with reference to the accompanying schematic figures wherein
Figure 1 shows a section through inked, lacquered board substrate prior to impression,
Figure 2 shows a section through the board of figure 1 after the impression of the hologram therein,
Figure 3 shows a section through a board coated with a metallised polymer layer prior to impression, and
Figure 4 shows a section through the board of Figure 3 after impression.

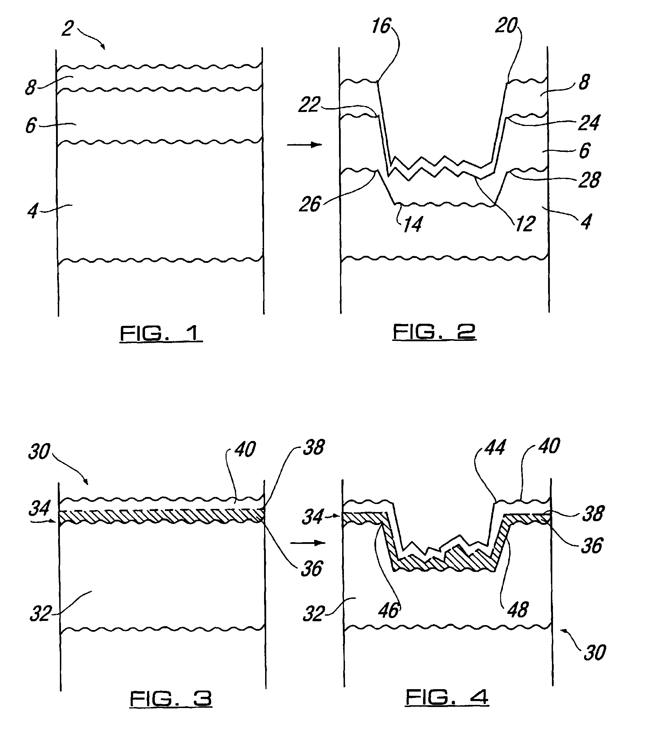

Referring firstly to Figure 1 there is shown a portion of a board 2 consisting of a carton board substrate 4 printed on one surface with an ink layer 6 which is covered with a varnish or lacquer layer 8.

The imperfections in the surfaces represent the surface roughness of each layer.

After impression with the holographic image master plate as described above, a relief pattern is impressed at least the lacquer layer 8, and probably into the ink layer 6, but the overall amplitude variation in the holographic relief pattern impressed into these layers is probably too small (typically of the order of a few or tens of microns) to affect the surface of the substrate layer beneath these two layers. Accordingly the surface of this substrate layer would probably remain unaffected underneath the holographic image master plate during the impression as shown at 10, 12, 14 respectively but in any event the impression is of sufficient weight to effect a change in the relief profile of the substrate 4. It can be seen from figure 2 that the surface of the substrate has been lowered at 14 in the region of the impression, and the overall effect is to form a peripheral edge regions at 16, 20, at 22, 24, and at 26, 28 in the lacquer, ink and substrate layers respectively. In the finished article, these edge regions are viewable by the naked eye and significantly enhance the holographic image by drawing the eye thereto.

Referring to Figure 3, there is shown a section through a board 30 consisting of a carton board substrate 32 to which is adhered a metallised polymer film indicated generally at 34 and being comprised of an adhesive layer 36, a vacuum deposited metallised layer shown at the dotted line 38 and a polymer film layer 40 protecting and covering the metallised layer 38.

In Figure 4, the board of Figure 3 is shown after having been impressed with a holographic image master plate (not shown). The image plate impresses a relief pattern into the polymer layer 40 and it is clear from the figure that a significant (at least of the order of hundreds of microns as opposed to the tens of microns which is a more typical value for the thicknesses of the various layers) depression is made into the substrate layer by said impression. Thus in accordance with the invention there is a change in the relief profile of the substrate layer.

Again the provision of coinciding edge regions at 42, 44 in the metallised polymer film and immediately beneath same at 46, 48 in the substrate layer serve to accentuate or draw the eye of the user of the impressed board to the fact that a holographic image is impressed into same.

In summary therefore, a holographic image printing method is described wherein a substrate material such as conventional board is firstly coated with an ink, varnish, lacquer or other opaque, or translucent coating. The coated board is subsequently pressuredly contacted with a holographic impression plate on which is provided a shim or the like having a holographic relief pattern etched thereon. During the impression of the substrate, the board and/or shim are heated to between 80 and 180°C, the particular temperature being determined by the particular coating provided on the substrate. While impression is taking place, the pressure is both sufficient to cause the coating to flow plastically into the microscopic recesses in the holographic image plate and also to cause the overall relief profile of the substrate to be altered in the region surrounding or adjacent the holographic image so delivered to the coating of said substrate. The effect is the provision of a relief feature on the substrate within which is provided an aesthetic holographic image.

## Claims

**1.** A method for providing a printed, varnished, lacquered or otherwise coated carton-type board substrate with a holographic image, comprising the steps of passing said substrate through an impression station whereat said substrate is subjected to heat while being pressuredly contacted with a holographic image plate characterised in that the holographic image plate impresses a relief holographic pattern into the coating of said substrate and that said impression alters the relief profile of the substrate in the region of said impressed holographic image.

**2.** A method according to claim 1 characterised in that the substrate has a metallised coating, a substantial portion of which is obscured by printed material to leave only discrete portions in which a holographic image can be impressed.

**3.** A method according to either claim 1 or 2 characterised in that the holographic image plate is maintained at a temperature of between 80° and 180°C.

**4.** A method according to any preceding claim characterised in that the alteration of the relief profile of the board is manifested in an embossing or de-bossing of the particular portion of the substrate immediately below the coating on which the holographic image is impressed.

**5.** A method according to any preceding claim characterised in that the process is sheet fed.

**6.** A method according to any preceding claim characterised in that the coating is an ink layer.

**7.** A method according to claim 6 characterised in that the ink layer is covered by a lacquer or varnish layer to prevent the ink from running or being abradably impaired after printing.

**8.** A method according to claim 6 or 7 characterised in that said coating or covering is allowed to dry before being impressed.

**9.** A method according to any preceding claim characterised in that the substrate is a conventional carton board which is coated on at least one side with a metallised polymer film to provide at least one surface of the board with a high degree of reflectivity.

**12.** A method according to claim 11 characterised in that the coated board is printed on the coated surface prior to impression to substantially obscure the reflective layer except in regions where it is desired to provide a holographic impression.

**13.** A method according to claim 5 characterised in that the process is web fed in that said web is passed continuously through printing means whereafter a lacquer is applied thereto and subsequently the printed, lacquered board substrate is fed between a pair of proximally disposed cylinders defining a nip, one of said cylinders being provided with a plate thereon having at least one holographic relief pattern on its external surface and means for causing an alteration in the relief profile of the substrate in the region of the holographic image impressed therein.

**14.** A board substrate material having a thermo-plastic coating layer of an ink, varnish, lacquer or metallised polymer film applied thereto which is capable of flowing when heated, said film or board material having impressed therein a holographic image characterised in that the relief profile of the substrate in the region of the impressed holographic image is altered during the impression to highlight said holographic image.
